# EUROPEAN PATENT APPLICATION

(11) **EP 4 542 027 A1**
(43) Date of publication of application: **23.04.2025**
(21) Application number: 23203716.8
(22) Date of filing: 16.10.2023
(51) Int. Cl.: F03D 13/10, F03D 13/40, B63B 35/00, B66C 23/18, B66C 23/52, E02B 17/00

(54) **OFFSHORE WIND TURBINE INSTALLATION**

(71) Applicant: Siemens Gamesa Renewable Energy A/S, 7330 Brande (DK)
(72) Inventor: Brice, Russell James, 7120 Vejle Øst (DK)
(74) Representative: SGRE-Association

(57) **Abstract**

It is described a method of at least partially installing at least one wind turbine at an offshore site (5), the method comprising: loading at least one lower tower portion (3) of a wind turbine onto a vessel, the lower tower portion (3) spanning less than an entire wind turbine tower; transporting the lower tower portion (3) to the offshore site (5); lifting and guiding the lower tower portion (3) such that a lower end (7) approaches a tower connection portion (7) provided at an offshore foundation; connecting the lower tower portion (3) at the lower end (7) with the tower connection portion (8).

## Description

### Field of invention

The present invention relates to a method of at least partially installing at least one wind turbine at an offshore site. Further, the present invention relates to a lower tower portion or tower handling vessel which is in particular substantially configured to perform the above-mentioned method. Still further, the present invention relates to a system for installing at least one wind turbine at an offshore site including the lower tower portion handling vessel.

### Art Background

Conventionally, for setting up an offshore wind turbine, a foundation and a cabling at an offshore site need to be completed. After the completion of the foundation, conventionally, the offshore wind turbine is installed in a single step using a particular turbine installation vessel. Nowadays, the wind turbines are growing in size and weight complicating the installation of the offshore wind turbine in a conventional manner. In particular, loads in sea fastening and the installation vessel's stability are also becoming compromised. Furthermore, the wind turbine tower increases in size sometimes exceeding the typical capability of cranes in the preassembly harbour.

Thus, it is observed that installation of an offshore wind turbine by the conventional method becomes more and more complicated and/or is becoming noticeable less efficient or has some problems.

Thus, there may be a need for a method of at least partially installing at least one wind turbine at an offshore site and there may also be a need for a lower tower portion handling vessel in particular enabling such an installation method. Furthermore, there may be a need for an entire system for installing at least one wind turbine at an offshore site, wherein conventionally observed problems or disadvantages are at least mitigated.

### Summary of the Invention

This need may be met by the subject matter according to the independent claims. Advantageous embodiments of the present invention are described by the dependent claims.

According to an embodiment of the present invention it is provided a method of at least partially installing at least one wind turbine at an offshore site, the method comprising: loading at least one lower tower portion of a wind turbine onto a (e.g. denoted as "lower tower portion and/or tower handling") vessel, the lower tower portion spanning less than an entire wind turbine tower; transporting the lower tower portion to the offshore site; lifting and guiding the lower tower portion such that a lower end approaches a tower connection portion provided at an offshore foundation; connecting the lower tower portion at the lower end with the tower connection portion.

The method may substantially be performed by a lower tower portion handling vessel according to an embodiment of the present invention which will be described below in detail.

When the wind turbine is completely installed at the offshore site, the wind turbine may comprise a wind turbine tower composed at least of the lower tower portion and at least one further tower portion, in particular upper tower portion and/or one or more intermediate tower portions. Further, the completely installed wind turbine may comprise a nacelle mounted on the upper part of the erected tower, in particular mounted on top of the upper tower portion. The nacelle may comprise a generator being mechanically coupled to a hub. At the hub, plural wind turbine blades are mounted in the completed wind turbine.

The method may not necessarily involve to install the complete wind turbine but may at least involve to install the lower tower portion at the offshore site. For installing the lower tower portion, essentially only the lower tower portion handling vessel may be required. For completely installing or setting up the offshore wind turbine, one or more further vessels may be required which may be constructed and/or configured differently from the lower tower portion handling vessel. It is noted that the designation "lower tower portion handling vessel" is not to be understood as restricting the kind of vessel, unless the vessel is configured or adapted to perform at least the method steps of transporting the lower tower portion and the lifting and guiding the lower tower portion.

For the loading step and/or the connecting step, further equipment may be required which may be separate from the vessel, but according to embodiments of the present invention, also the loading step and the connecting step may be performed by equipment and/or personal included in the lower tower portion handling vessel.

The loading may be performed using a crane which may be a portion of the lower tower portion vessel or may for example be an onshore crane. Loading may involve to lift the lower tower portion and laterally move the lower tower portion, in particular while being in an upright position. For example, on an onshore site, for example a harbour, a storage area may be provided to which the preassembled lower tower portions are supplied (for example from one or more factories or assembly sites) and at which the lower tower portions may be stored. In particular, the lower tower portions may be secured by storage and securement equipment on the onshore site in particular enabling to receive plural lower tower portions and secure them at a lower end, for example arranged in a regular or irregular two-dimensional array.

The lower tower portions may be loaded one by one in particular using a crane installed or arranged on the lower tower portion handling vessel and may be put onto and secured to a vessel loading area, in particular comprising connection means and securing means for rigidly connecting and securing a lower end of the respective lower tower portion to the vessel. Loading may involve to vertically lift the lower tower portion, and/or to laterally move the lower tower portion and to vertically lower the lower tower portion to a respective connection and securing equipment on the loading area of the vessel.

The one or more lower tower portions loaded onto the lower tower portion handling vessel may then be transported being in an upright manner, in particular while the lower tower portion(s) is or are covered with a cover in order to avoid contamination of an inside of the respective lower tower portions.

The offshore site may be a site at sea. When the offshore site is reached by the vessel, the lifting and guiding the lower tower portion may be performed, thereby using equipment of the lower tower portion handling vessel and/or using equipment of one or more other vessels. The offshore foundation may be a foundation which is rigidly connected to the sea ground or bottom sea. The offshore foundation may comprise concrete and/or metal such as steel.

The tower connection portion may also refer to as a foundation transition piece. The tower connection portion may comprise one or more connection members or connection capabilities, such as a flange for example. Also, the lower end of the lower tower portion may comprise for example a flange having plural through-holes. The flange of the lower end of the lower tower portion may be connected with the flange of the tower connection portion at the offshore foundation and may be fixed to each other by plural bolts for example, in order to connect the lower tower portion and the lower end with the tower connection portion.

The lower tower portion may have substantially cylindrical symmetry or geometry. A cross-section of the lower tower portion may substantially be circular. The lower tower portion may be comprised of one or more metallic ring portions which are completely preassembled when loaded onto the lower tower portion handling vessel. The lower tower portion does not represent the entire length of the tower of the wind turbine but may correspond to a lower part, being a fraction of the entire wind turbine tower.

In other embodiments an entire tower may be handled, stored and installed.

By preassembling and installing the lower tower portion in a single step, the lifting and guiding requirements at the offshore site may be reduced. The installation may be performed by the dedicated ship, which is also denominated as lower tower portion handling vessel in order to carry the lower portion of the wind turbine tower. The lower tower portion may for example be a bottom tower section approximately 1/4 to 1/2 of the length and/or approximately 1/3 to 2/3 of the weight of the full wind turbine tower. The lower tower portion may be stowed in the vertical orientation on the dedicated ship and may be installed prior to installing the remaining upper tower, the nacelle and the blades for example.

Conventionally, a wind turbine tower may in a complete configuration, i.e., in a single piece, be installed at an offshore site having a substantial weight and substantial height sometimes exceeding the capability of respective handling and installation equipment. When the wind turbine tower is divided in two or more pieces, or removed entirely from the conventional, there is additional weight of sea fastening the second piece of the tower and a much greater space is required to place double the amount of tower sections. For the ship to transport and install these pieces may take longer time and may have higher cost.

Therefore a dedicated ship for transporting the tower and/or lower tower portions is provided according to the invention.

When the lower tower portion is provided and installed according to the method of the present invention, installation may be simplified, since the length and the weight of the respective lower tower portion is less than the length and weight of conventional complete towers. Thereby, the respective dedicated ship may transport and install an increased number of wind turbine lower tower portions and improve the workability as for example a crane on the vessel does not need to handle such a long length for installation of the tower. Further, the dead weight of each wind turbine carried may be significantly less than conventionally used. The stability of the dedicated vessel may also greatly be improved, as the center of gravity of the towers is also significantly lowered, for example during transportation. Further, the reduction of weight related to towers enables a greater number of wind turbines to be transported and installed.

According to an embodiment of the present invention, during loading and/or transporting and/or lifting and/or guiding the lower tower portion, the lower tower portion is substantially in an upright position, in particular such that a longitudinal direction of the lower tower portion is oriented substantially vertically.

When in the upright position, the lower tower portion may be loaded and/or transported and lifted and guided from the vessel in a more simple manner, since its orientation does not need to be changed. Conventionally, wind turbine towers may have been transported in a substantially horizontal orientation requiring to change the orientation before the tower is installed at the offshore site. When in the upright position, the lower tower portion may in particular be vertically oriented, i.e., substantially in an orientation also adopted after the installation at the offshore site.

According to an embodiment of the present invention, the vessel includes a crane, wherein the loading and/or the lifting and/or guiding the lower tower portion is performed using the crane, in particular while the vessel is free floating on the sea.

When the (lower tower portion handling) vessel includes a crane, no further lifting and/or guiding equipment may be required at the offshore site, namely no further vessels may be required to perform the installation. The crane may be configured to comply with the height of the lower tower portion which may be significantly less than the height of an entire wind turbine tower. The crane may comprise at least one crane arm or crane beam to the top of which the load of the lower tower portion may be coupled, in particular to a crane wire or rope having a hook or any other connection member. Thereby, installation may be simplified.

According to an embodiment of the present invention, the vessel includes a guiding equipment for guiding the lower tower portion towards the tower connection portion, the guiding equipment in particular being adapted to apply a drawing force at least one or two locations of the lower tower portion, being spaced apart in the longitudinal direction of the lower tower portion.

The crane may comprise a hook at which the lower tower portion may be connected to carry the weight of the lower tower portion. Thus, the lower tower portion may be coupled to the crane at a single location or area or point which carries the substantially entire weight of the lower tower portion. Thereby, the lower tower portion may have the freedom to slightly swivel or oscillate about the supporting position at the crane. For avoiding or at least mitigating swivelling movement of the lower tower portion, the guiding equipment may be utilized which may be configured to ensure a safe movement of the lower portion from the loading area on the vessel to the laterally spaced apart position at the or above the offshore foundation. The guiding equipment thus may enable to keep the lower tower portion substantially in a vertical orientation also during the lifting and/or guiding (e.g. laterally moving) by applying an in particular drawing force at the at least two locations. The at least two locations of the lower tower portion may be vertically spaced apart in order to easily maintain the intended orientation of the lower tower portion. Thereby, the installation process may be provided in a more secure and more accurate and also faster manner.

According to an embodiment of the present invention, the guiding equipment includes tag lines which are connected at one end at the crane and/or the vessel and are connected at another end at a bottom location and/or a middle location and/or a top location of the lower tower portion, wherein in particular for guiding the lower tower portion, a tension of the tag lines is controlled and/or adjusted.

Thereby, a particular implementation is provided utilizing conventionally available tag lines. The tag lines may include metallic ropes and/or wires for example. The tag lines may for example be connected on the one end to a middle location of a crane beam and on the other end on a top portion of the lower tower portion. Other tag lines may for example be connected at the one end at the vessel, in particular at a same vertical position as a loading area and on another end at a lower end or middle section of the lower tower portion. When several tag lines are provided being connected at vertically spaced apart locations of the lower tower portion, the guiding may be performed in a secured manner and in particular the vertical orientation of the lower tower portion may substantially be maintained during the entire lifting and/or guiding procedure.

According to an embodiment of the present invention, during the lifting and/or guiding the lower tower portion, an active or passive heave compensator is coupled between the lower tower portion and a crane beam. Thereby the heave compensator may be an individual unit.

In another embodiment heave compensation capability could be a functionality built into or within the crane (e.g. beam or arm or rope).

The heave compensator may compensate (at least partially) for heave (e.g. up and down) movements of free floating vessel on the see. Thereby, also the connection of the lower end of the lower tower portion to the tower connection portion provided at the offshore foundation may be performed in a more secure manner without or reducing the risk of an impact occurring between the lower end of the lower tower portion and the tower connection portion provided at the offshore foundation. The (passive) heave compensator may comprise a spring and damping means. An active heave compensator may further comprise a compressor and a hydraulic system for actively counteracting any vertical movements of the crane top due to the respective movements of the vessel. Thereby, conventionally available heave compensators may be utilized to implement the installation method.

According to an embodiment of the present invention, the vessel includes storage mounting and securing equipment arranged at a vessel loading area for mounting and securing plural, e.g. 5 or 10 or 20 up to 60, lower tower portions, in particular having substantially circular cross section, in a vertical manner, in particular in a regular 2D array, a loading capacity in particular being between 200 t and 1200 t or even a higher weight for each lower tower portion.

The mounting and securing equipment may for example comprise plural securing members, for example including bolts and/or clamps for mounting and securing the plural lower tower portions. The mounting and securing equipment may be removable from the vessel and/or may be configured or provided depending on the geometry of the lower tower portions to be secured and transported. Thereby, plural lower tower portions may be conveniently and securely loaded and transported.

According to an embodiment of the present invention, the mounting and securing equipment is adapted to mount and secure lower tower portions having different diameters, in particular between 5 m and 15 m or 20 m or even larger diameter. Thereby, great flexibility may be provided, supporting wind turbines of different sizes.

According to an embodiment of the present invention, wherein the lower tower portion spans between ¼ and ½ of an entire wind turbine tower height and/or has between 1/3 and 2/3 of the weight of an entire wind turbine tower weight, wherein the lower tower portion has previously been fully or partially preassembled at an onshore site, in particular preassembly harbour and/or at manufacturer(s).

Other values may be possible according to other embodiments of the present invention. The lower tower portion may be completed when loaded onto the dedicated vessel in the sense that substantially no further installations or modifications are required for properly operating later on the offshore site.

According to an embodiment of the present invention, the method further comprises transporting and/or lifting and/or guiding and/or connecting one or more intermediate tower portions on top of the lower tower portion or on top of a respective uppermost tower portion.

The intermediate (or upper, see below) tower portion may for example span between ¼ and ½ (or less) of an entire wind turbine tower height and may have between 1/3 and 2/3 (or less) of the weight of the entire wind tower weight. Other values may be possible. Thereby, installation of the entire wind turbine may further be improved and simplified.

According to an embodiment of the present invention, the method further comprises transporting and/or lifting and/or guiding and/or connecting one or more upper tower portions on top of the lower tower portion or on top of a respective uppermost tower portion; transporting and/or lifting and/or guiding and/or connecting one or more nacelles including a hub on top of the upper tower portion or on top of a respective uppermost tower portion; transporting and/or lifting and/or guiding and/or connecting one or more blades at a hub supported at the nacelle, in particular using for the transporting a transport vessel and for the lifting and/or guiding and/or connecting an installation vessel, one or both being different from the lower tower portion handling vessel.

Thereby, installation of at least one entire wind turbine may be enabled. The method may for example be performed by a system for installing at least one wind turbine at an offshore site according to an embodiment of the present invention which will be described further below in more detail.

According to an embodiment of the present invention, during transportation and/or before lifting the lower tower portion is covered with tower portion cover, the method comprising removing the tower portion cover before lifting and/or guiding the lower tower portion; and/or after connecting the lower tower portion: covering the lower tower portion with the tower portion cover. The cover may protect the interior of the respective tower portion from contamination or damage.

According to an embodiment of the present invention, the method further comprises providing a gangway for personal from the vessel to a platform (or access point/region of the wind turbine) of the foundation.

Thereby, it is enabled to more accurately guide the lower tower portion to the tower connection section at the foundation for example by monitoring the guiding process and controlling the guiding process by visual or automatic inspection (e.g. by personal or a crew) of the positions and/or the movement of the lower tower section, in particular with respect to or in relation to the location of the tower connection portion. An installation personnel or crew may for example visually monitor or follow the guiding process and may give control signals for controlling the crane and/or guiding equipment in order to correct any deviations from intended movements or positionings (laterally and/or vertically). Further, the personnel may then perform the connection for example by manually inserting bolts or clamps and/or nuts.

It should be understood, that features, individually or in any combination, disclosed, described, explained or provided for a method of at least partially installing at least one wind turbine at an offshore site, may also, individually or in any combination, be applied, provided or employed by a lower tower portion handling vessel according to embodiments of the present invention and vice versa.

According to an embodiment of the present invention it is provided a lower tower portion handling vessel for at least partially installing at least one wind turbine at an offshore site, the vessel comprising a loading area for loading at least one lower tower portion of a wind turbine, the lower tower portion spanning less than an entire wind turbine tower; a motor for moving the vessel on sea in order to transport the lower tower portion to the offshore site; lifting and guiding equipment adapted for lifting and guiding the lower tower portion such that a lower end approaches a tower connection portion provided at an offshore foundation for connecting the lower tower portion at the lower end with the tower connection portion.

The vessel may be configured to substantially perform a method of installing at least partly a wind turbine at an offshore site as explained or described above. Thereby, the method may be implemented and performed in a simple manner.

According to an embodiment of the present invention it is provided a system for installing at least one wind turbine at an offshore site, the system comprising: a lower tower portion handling vessel according to the preceding claim; a transport vessel adapted: to transport one or more upper tower portions and/or one or more nacelles including a hub and/or one or more blades; an installation vessel adapted: to lift and/or guide and/or connect one or more upper tower portions on top of the lower tower portion or on top of a respective uppermost tower portion; and/or to lift and/or guide and/or connect one or more nacelles including a hub on top of the upper tower portion or on top of a respective uppermost tower portion; and/or to lift and/or guide and/or connect one or more blades at a hub supported at the nacelle.

Thereby, installation of plural entire wind turbines at an offshore site may be enabled in a simple and cost-effective manner.

The entire wind turbine tower may have a height of between 80 m and 115 m, the diameter of the tower may be between 5 m and 15 m. Other values may be possible.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a loading step of a method of at least partially installing at least one wind turbine at an offshore site according to an embodiment of the present invention;
Fig. 2 illustrates a transporting step of a method of at least partially installing at least one wind turbine at an offshore site according to an embodiment of the present invention;
Figs. 3 and 4 illustrate a lifting step of a method of at least partially installing at least one wind turbine at an offshore site according to an embodiment of the present invention;
Figs. 5 and 6 illustrates a guiding and lowering step of a method of at least partially installing at least one wind turbine at an offshore site according to an embodiment of the present invention;
Fig. 7 illustrates the end of a guiding step and a connecting step of a method of at least partially installing at least one wind turbine at an offshore site according to an embodiment of the present invention; and
Fig. 8 illustrates plural partly installed wind turbines each comprising a lower tower portion performed by a lower tower portion handling vessel according to an embodiment of the present invention.

### Detailed Description

The illustration in the drawings is in schematic form.

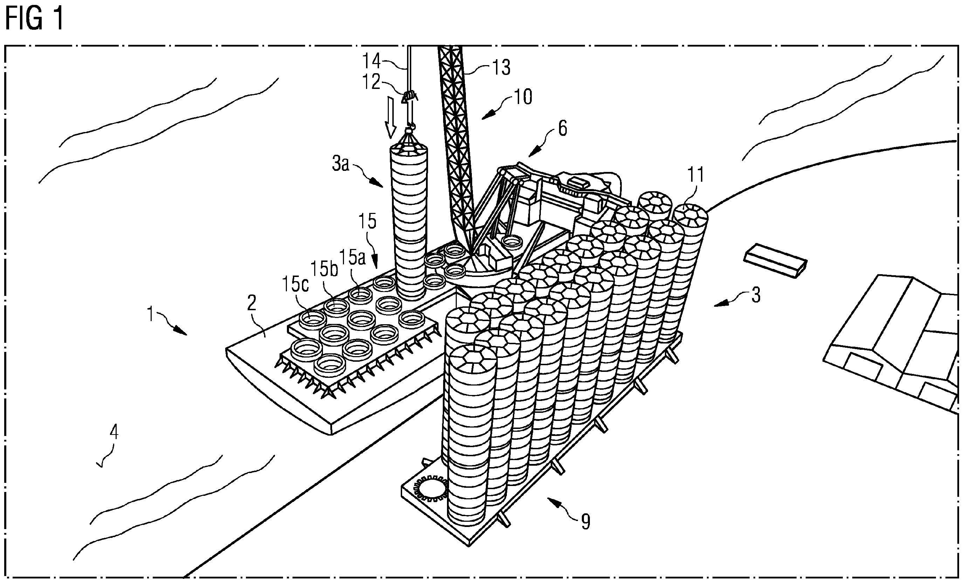

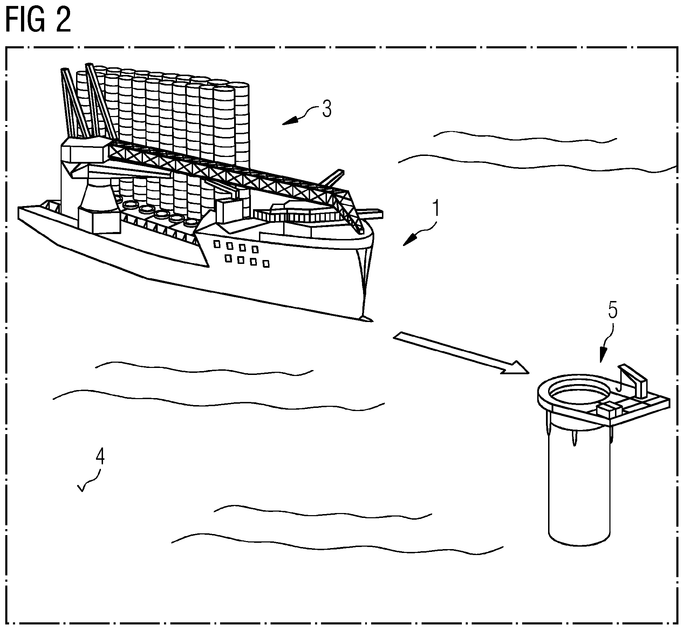

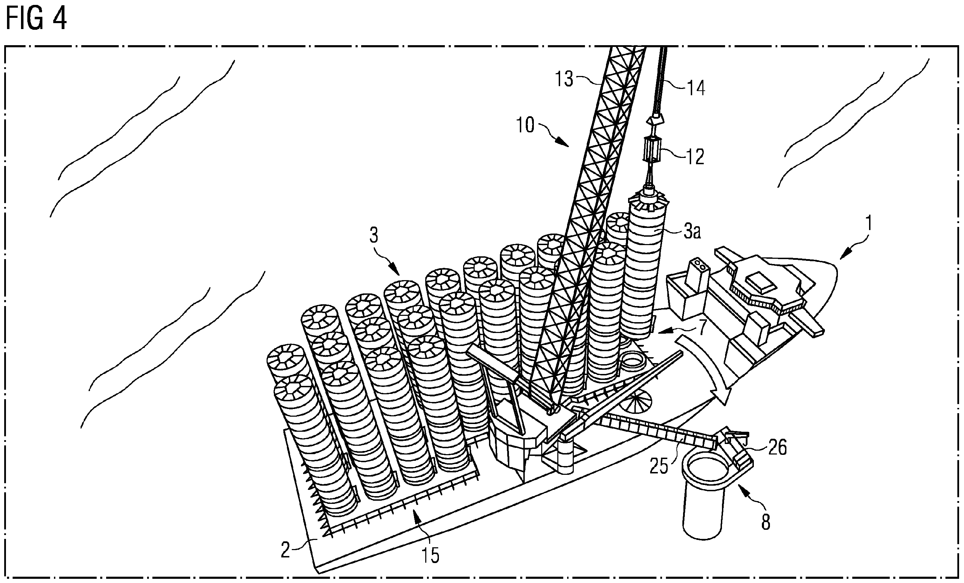

The loading step of a method of at least partially installing at least one wind turbine at an offshore site according to an embodiment of the present invention illustrated in Fig. 1 is performed using a (lower tower portion handling) vessel 1 according to an embodiment of the present invention. The (lower tower portion handling) vessel 1 includes a loading area 2 for loading at least one lower tower portion 3a spanning less than an entire wind turbine tower. The vessel 1 further comprises a not illustrated motor for moving the vessel 1 on the sea 4 in order to transport the lower tower portion 3a to an offshore site 5 (illustrated in Fig. 2). The vessel 1 further comprises lifting and guiding equipment 6 adapted for lifting and guiding the lower tower portion 3 such that a lower end 7 (illustrated in Figs. 4, 5, 6) approaches a tower connection portion 8 (illustrated in Figs. 4, 5, 6) provided at an offshore foundation not illustrated in Fig. 4 (because it is below the sea level) for connecting the lower tower portion 3 at the lower end 7 with the tower connection portion 8.

As is illustrated in Fig. 1, the vessel 1 includes storage mounting and securing equipment 15 arranged at the vessel loading area 2 for mounting and securing the plural lower tower portions 3, in particular in a regular two-dimensional array. The individual mounting and securing areas 15a,b,c,... may be adapted to support mounting and securing lower tower portions 3 having different diameters. The lower tower portion 3a may span between ¼ and ½ of an entire wind turbine tower height for example.

For loading the plural lower tower portions 3a,b,c,... onto the loading area 2 of the vessel 1, the plural lower tower portions (the plurality being labelled with reference sign 3) are stored on an onshore loading and storing equipment 9, enabling to store the plural lower tower portions 3a,b,c,... in an upright position. As can be seen in Fig. 1, during loading the lower tower portion 3a, it is in the vertical orientation, i.e., upright position. Thereby, a longitudinal direction is oriented substantially vertically.

In the embodiment illustrated in the figures, the lifting and guiding equipment 6 includes a crane 10. Fig. 2 illustrates the transporting step after the plural lower tower portions 3 have been loaded onto the vessel 1. The vessel 1 then approaches the offshore site 5.

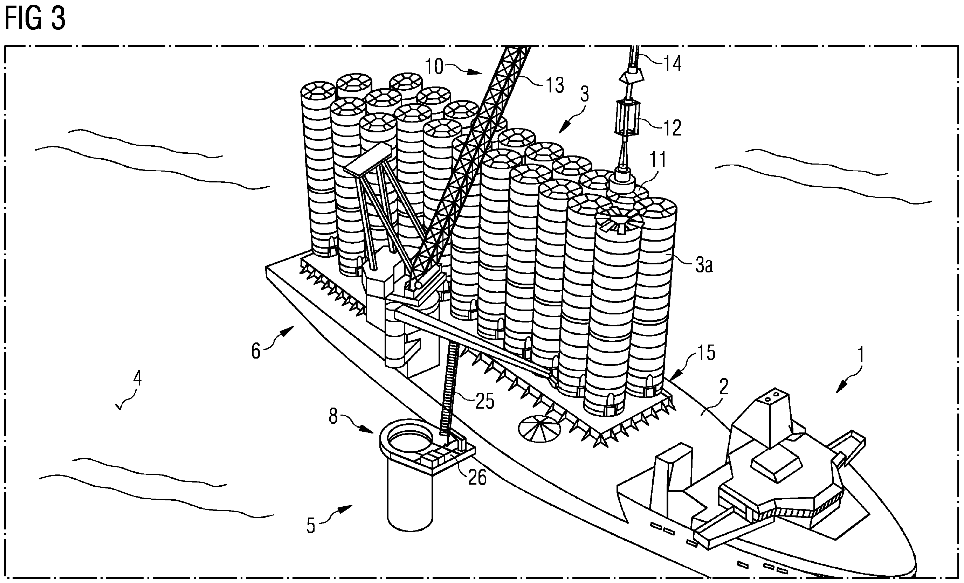

**Figs. 3** **and** **4** illustrate a lifting step of the installation method, for which the crane 10 is used. Thereby, the vessel 1 is free floating on the sea 4. In the step illustrated in Fig. 3, a tower portion cover 11 covering an upper portion of the lower tower portion 3a is removed using the crane 10. The tower portion cover 11 is removed before lifting and/or guiding the lower tower portion 3a. The tower portion cover 11 may be covering the lower tower portion 3a after connecting the lower tower portion 3a to the tower connection portion 8.

According to an embodiment of the present invention, the method further comprises providing a gangway 25 for personal from the vessel to a platform 26 of the foundation.

As is illustrated in Fig. 4, the lower tower portion 3a is then lifted using the crane 10. During the lifting and/or guiding the lower tower portion 3a, an active or passive heave compensator 12 is coupled between the lower tower portion 3a and a crane beam 13, in particular a holding rope or holding wire 14.

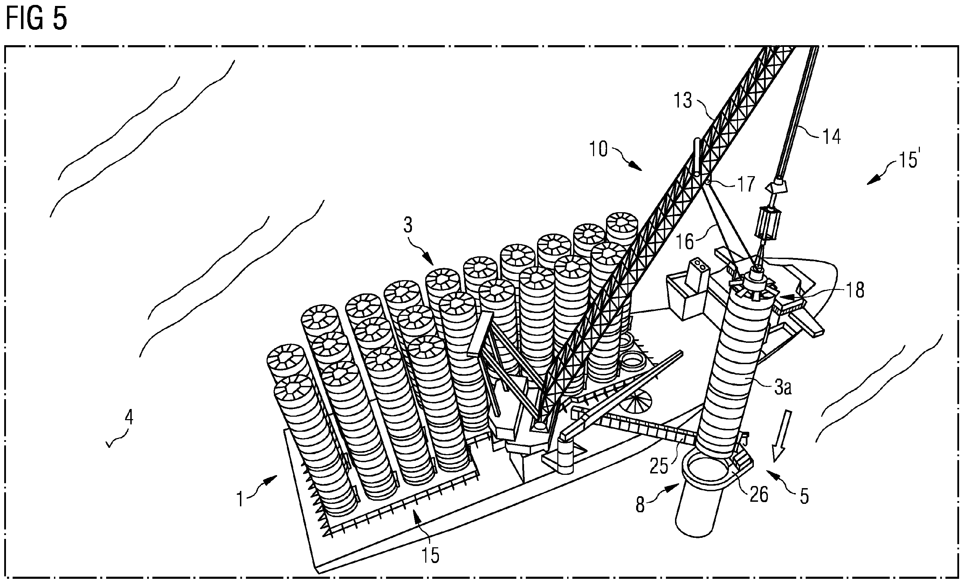

In the **Fig. 5** it is illustrated, that the lower tower portion 3a is lowered when it has been guided to be vertically above the tower connection portion 8 provided at the foundation. The vessel 1 includes guiding equipment 15' for guiding the lower tower portion 3a towards the tower connection portion 3. The guiding equipment 15' includes tag lines 16 which are connected at one end 17 at the crane 10 and are connected at another end at top location of the lower tower portion 3a, the top location labelled with reference sign 18. The tension of the tag lines 16 may be controlled in order to achieve an intended positioning and orienting of the lower tower portion 3a.

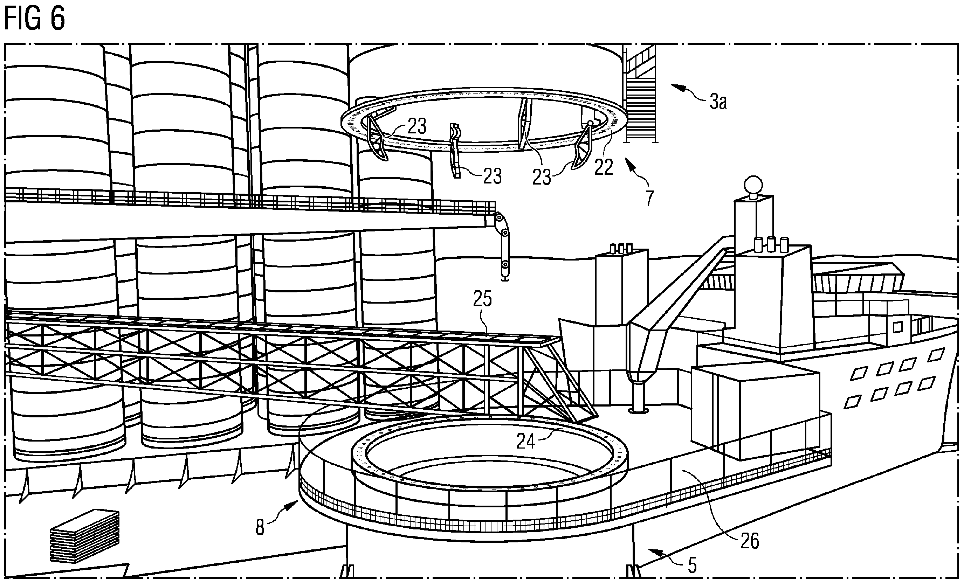

**Fig. 6** illustrates the lowering step lowering the lower end 7 of the lower tower portion 3a towards the tower connection portion 8 at the foundation. The lower end 7 of the lower tower portion 3a includes at an inside of the circular flange 22 inwardly inclined protrusions 23 which facilitate inserting them into the circular opening 24 of the tower connection portion 8.

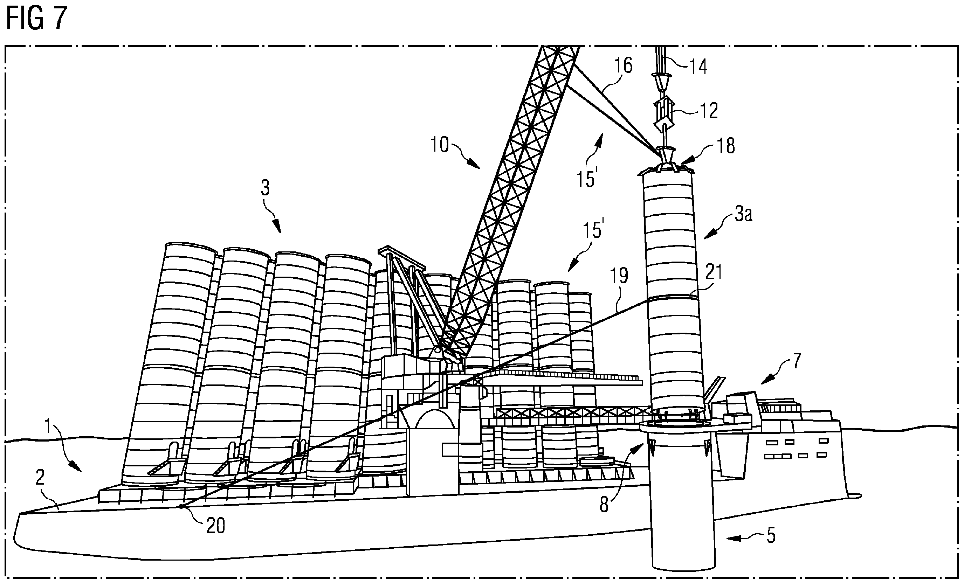

The vessel or the installation process may further employ further tag lines 19 (comprised in guiding equipment 15') illustrated in **Fig. 7** which are on one end 20 mounted at the vessel 1 (for example close to the loading area 2) and on another end on a middle location 21 of the lower tower portion 3a.

In Fig. 7, the lower tower portion 3a has been lowered to contact the tower connection portion 8 at the foundation by properly operating the crane 10 and the tag lines 16, 19, in particular by controlling their respective tensions. The control may for example be performed by an installation personnel or crew operating respective control means based e.g. on visual inspection of the installation or guiding procedure.

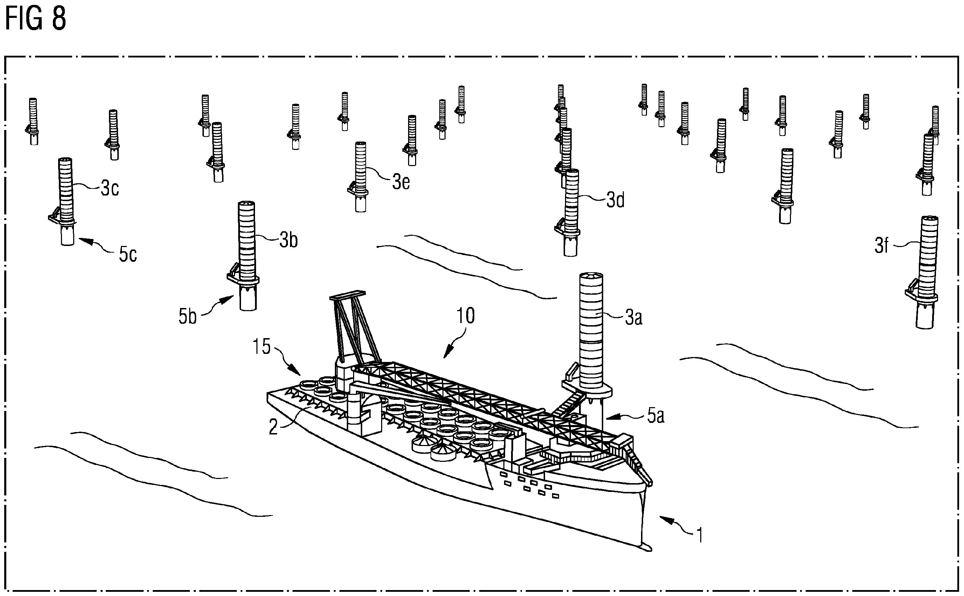

The vessel 1 may install the lower tower portions 3 loaded onto the vessel one by one and **Fig. 8** illustrates the plural lower tower portions 3 being installed at the respective installation sites. After that, the vessel 1 may return to a harbour in order to load and after that to install further tower portions at other offshore sites.

The installation method may further, i.e., after installing all or at least some of the lower tower portions at the respective offshore sites, include to mount for example respective upper tower portions on top of the lower tower portions and then to install a nacelle on top of the upper tower portions and then also install wind turbine blades to respective hubs, in order to complete installation of the entire wind turbines.

By directly installing a portion of the tower from the point of manufacture, transport to the preassembly harbour is not needed according to embodiments of the present invention. The lower tower portion handling vessel may also be referred to as a bottom tower installation vessel. The bottom tower installation vessel (BTIV) may pick up all the lower tower portions at the manufacturer and moves them to the installation site. The lower tower portion may be installed to the transition piece (TP), also referred to as tower connection portion at the foundation.

A feeder vessel may be loaded with all remaining tower sections, blade racks including rotor blades and nacelles and may be moved to the installation site. The feeder vessel may transfer all the remaining wind turbine components to the installation vessel which may be configured to install the remaining wind turbine components starting from the already installed lower tower portions.

The installation vessel may then stay offshore, thus, may not return to any harbour. The installation vessel may then await the arrival of further feeder vessels in order to continue installation of further wind turbines at the offshore sites.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of at least partially installing at least one wind turbine at an offshore site (5), the method comprising:
loading at least one lower tower portion (3) of a wind turbine onto a vessel (1), the lower tower portion (3) spanning less than an entire wind turbine tower;
transporting the lower tower portion (3) to the offshore site (5);
lifting and guiding the lower tower portion (3) such that a lower end (7) approaches a tower connection portion (8) provided at an offshore foundation;
connecting the lower tower portion (3) at the lower end (7) with the tower connection portion (8).

2. Method according to the preceding claim, wherein during loading and/or transporting and/or lifting and/or guiding the lower tower portion (3), the lower tower portion (3) is substantially in an upright position, in particular such that a longitudinal direction of the lower tower portion is oriented substantially vertically.

3. Method according to any one of the preceding claims,
wherein the vessel (1) includes a crane (10),
wherein the loading and/or the lifting and/or guiding the lower tower portion (3) is performed using the crane (10), in particular while the vessel (1) is free floating on the sea (4) .

4. Method according to any one of the preceding claims,
wherein the vessel (1) includes a guiding equipment (10, 15') for guiding the lower tower portion (3) towards the tower connection portion (8), the guiding equipment (15') in particular being adapted to apply a drawing force at least two locations (18, 21) of the lower tower portion (3), being spaced apart in the longitudinal direction of the lower tower portion (3).

5. Method according to the preceding claim, wherein the guiding equipment (15') includes tag lines (16, 19) which are connected at one end at the crane (10) and/or the vessel (1) and are connected at another end at a bottom location and/or a middle location (21) and/or a top location (18) of the lower tower portion (3),
wherein in particular for guiding the lower tower portion (3), a tension of the tag lines is controlled and/or adjusted.

6. Method according to any one of the preceding claims,
wherein during the lifting and/or guiding the lower tower portion (3), an active or passive heave compensator (12) is coupled between the lower tower portion (3) and a crane beam (10) or crane wire (14).

7. Method according to any one of the preceding claims,
wherein the vessel (1) includes storage mounting and securing equipment (15a,b,c,...) arranged at a vessel loading area (2) for mounting and securing plural, in particular 20 to 60, lower tower portions (3), in particular having substantially circular cross section, in a vertical manner, in particular in a regular 2D array, a loading capacity in particular being between 700 t and 1200 t for each lower tower portion (3).

8. Method according to the preceding claim, wherein the mounting and securing equipment (15a,b,c,...) is adapted to mount and secure lower tower portions (3) having different diameters, in particular between 5 m and 15 m.

9. Method according to any one of the preceding claims,
wherein the lower tower portion (3) spans between ¼ and ½ of an entire wind turbine tower height and/or has between 1/3 and ½ of the weight of an entire wind turbine tower weight, wherein the lower tower portion (3) has previously been fully preassembled at an onshore site, in particular preassembly harbour.

10. Method according to any one of the preceding claims, further comprising:
transporting and/or lifting and/or guiding and/or connecting one or more intermediate tower portions on top of the lower tower portion (3) or on top of a respective uppermost tower portion.

11. Method according to any one of the preceding claims, further comprising:
transporting and/or lifting and/or guiding and/or connecting one or more upper tower portions on top of the lower tower portion (3) or on top of a respective uppermost tower portion;
transporting and/or lifting and/or guiding and/or connecting one or more nacelles including a hub on top of the upper tower portion or on top of a respective uppermost tower portion;
transporting and/or lifting and/or guiding and/or connecting one or more blades at a hub supported at the nacelle,
in particular using for the transporting a transport vessel and for the lifting and/or guiding and/or connecting an installation vessel, one or both being different from the lower tower portion handling vessel.

12. Method according to any one of the preceding claims, wherein during transportation and/or before lifting the lower tower portion (3) is covered with tower portion cover (11), the method comprising:
removing the tower portion cover (11) before lifting and/or guiding the lower tower portion (3); and/or
after connecting the lower tower portion (3):
covering the lower tower portion (3) with the tower portion cover (11).

13. Method according to any one of the preceding claims, further comprising:
providing a gangway (25) for personal from the vessel (1) to a platform (26) of the foundation.

14. Lower tower portion (3) and/or tower handling vessel (1) for at least partially installing at least one wind turbine at an offshore site (5), the vessel comprising:
a loading area (2) for loading at least one lower tower portion (3) and/or a tower of a wind turbine, the lower tower portion (3) spanning less than an entire wind turbine tower;
a motor for moving the vessel (1) on sea (4) in order to transport the lower tower portion (3) to the offshore site (5) ;
lifting and guiding equipment (6) adapted for lifting and guiding the lower tower portion (3) such that a lower end (5) approaches a tower connection portion (8) provided at an offshore foundation for connecting the lower tower portion (3) at the lower end (7) with the tower connection portion (8) .

15. System for installing at least one wind turbine at an offshore site, the system comprising:
a lower tower portion (3) and/or tower handling vessel (1) according to the preceding claim;
a transport vessel adapted:
to transport one or more upper tower portions and/or one or more nacelles including a hub and/or one or more blades;
an installation vessel adapted:
to lift and/or guide and/or connect one or more upper tower portions on top of the lower tower portion (3) or on top of a respective uppermost tower portion; and/or
to lift and/or guide and/or connect one or more nacelles including a hub on top of the upper tower portion or on top of a respective uppermost tower portion; and/or
to lift and/or guide and/or connect one or more blades at a hub supported at the nacelle.
